# EUROPÄISCHE PATENTANMELDUNG

(11) **EP 2 256 680 A1**
(43) Veröffentlichungstag der Anmeldung: **01.12.2010**
(21) Anmeldenummer: 10002673.1
(22) Anmeldetag: 13.03.2010
(51) Int. Cl.: G06Q 10/00

(54) **Verfahren und Vorrichtung zur automatisierten Verfolgung eines Warenkreislaufes**

(30) Priorität: 30.05.2009 DE 102009023541
(71) Anmelder: Holthausen Elektronik GmbH, 41334 Nettetal (DE)
(72) Erfinder: Holthausen, Michaël, 41749 Viersen (DE)
(74) Vertreter: Stenger, Watzke & Ring

(57) **Zusammenfassung**

Die vorliegende Erfindung betrifft ein Verfahren und eine Vorrichtung zur automatisierten Verfolgung eines Warenkreislaufes. Um ein Verfahren und eine Vorrichtung zur automatisierten Verfolgung eines Warenkreislaufes, welche eine weitgehend lückenlose Verfolgung von Waren sowie Entnahme- und Verkaufsabgleich zu ermöglichen, wird mit der Erfindung ein Verfahren zum Nachweis eines Warenbestandes und dessen Veränderung einer mobilen Verkaufseinheit vorgeschlagen, welche mit RFID Elementen bestückter und identifizierbarer Ware betrieben wird, wobei mittels eines FRID Lesegerätes und eines Computers der aktuelle Warenbestand der Verkaufseinheit ermittelt wird.

## Beschreibung

Die vorliegende Erfindung betrifft ein Verfahren und eine Vorrichtung zur automatisierten Verfolgung eines Warenkreislaufes.

Im Stand der Technik sind Nachverfolgungen von Warenbeständen selbstverständlich üblich. Einsatzgebiete sind insbesondere solche Verkaufseinheiten, bei denen es formale Besonderheiten gibt, beispielsweise sogenannte Zolllasten, Zollverkaufsstellen auf Schiffen, Zollwarencontainer in Flugzeugen und dergleichen. Aber auch bei Verkaufseinheiten für gefährliche Stoffe oder sensible Stoffe müssen eine Verfolgung des Warenverkehrs und eine Dokumentation erfolgen.

Die bisher üblicherweise durch Personen vorgenannten Inventurlistenerstellungen haben sich jedoch als unzureichend erwiesen. Am Beispiel eines Zollwarenverkaufscontainers eines Flugzeuges wird dies kurz erläutert:

Üblicherweise wird ein Container durch Lagerpersonal befüllt und nach einer Kontrolle nach dem Mehraugenprinzip eine entsprechende Liste erstellt. Dies bringt entsprechenden Zeitaufwand durch die Kontrolle von mindestens zwei Personen mit sich.
Die Liste kann in Papierformat oder auf einem Computer erstellt werden. Anschließend wird der Container verplombt und zum Verkaufsort transportiert. Dort wird nach Entfernung der Plombe ebenfalls eine kontrollierte Inventarisierung und ein Abgleich der mitgelieferten Liste durchgeführt. Auch hier ist wieder der gleiche Zeitaufwand sehr groß.

Bei dem späteren Verkauf von Artikeln aus dem Container erfolgt keine Verfolgung und aufgrund der sich üblicherweise einstellenden unübersichtlichen Situationen findet keine Zuordnung von Einnahmen zu verkauften Waren in konsequenter Weise statt. Abschließend soll eine weitere Mehraugeninventarisierung (vorzugsweise zwei Personen) und ein Abgleich mit den Verkaufsbelegen erfolgen. Dies entspricht einem entsprechenden Zeitaufwand, für den nicht immer die notwendige Kapazität vorhanden ist. Entsprechend nachlässig erfolgen die Kontrollen oder werden gänzlich unterlassen. Schlussendlich erfolgen der Rücktransport zum Lager und die abschließende Feststellung des Warenbestandes.

Die Erfahrung hat gezeigt, dass Verkaufsberechnungen, Erlösermittlungen, Provisionen, Fehlmengen, Fehlbeträge, Warenverlust, Diebstahl, Betrug und dergleichen praktisch nicht ernsthaft identifiziert oder festgestellt werden können. Man stellt lediglich fest, dass etwas nicht stimmt und Ware schlichtweg verschwunden ist. Aufgrund der Bestimmungen führt dies zu ungewöhnlich hohen Belastungen im Rahmen von Nachverzollungen, Warendifferenzergänzungen und dergleichen.

Ausgehend vom Stand der Technik liegt der Erfindung die **Aufgabe** zugrunde, ein Verfahren und eine Vorrichtung zur automatisierten Verfolgung eines Warenkreislaufes, welche eine weitgehend lückenlose Verfolgung von Waren sowie Entnahme- und Verkaufsabgleiche ermöglichen.

Zur technischen **Lösung** wird verfahrensseitig mit der Erfindung vorgeschlagen ein Verfahren zum Nachweis eines Warenbestandes und dessen Veränderung einer mobilen Verkaufseinheit, welche mit RFID Elementen bestückter und identifizierbarer Ware betrieben wird, wobei mittels eines RFID Lesegerätes und eines Computers der aktuelle Warenbestand der Verkaufseinheit ermittelt wird.

Das erfindungsgemäße Verfahren bringt den Vorteil mit sich, dass praktisch zu jedem Zeitpunkt und an jedem Ort eine Erfassung des Warenbestandes möglich ist. Durch die erfindungsgemäße Möglichkeit der Speicherung des jeweils erfassten Warenbestandes kann nunmehr ein Bestandsvergleich erfolgen und Warenflussermittlungen durchgeführt werden. Die vorrichtungsseitige Lösung der Erfindung besteht in einem Aufnahmebereich für mit RFID Etiketten bestückter Ware sowie wenigstens eine Gehäusewandung zur Durchführung eines RFID-Warenscans aufweist.

An eine mobile Verkaufseinheit bildender Container, Behälter, Wagen oder dergleichen weist ausreichend Aufnahmebereich wie Fächer, Regale und dergleichen zur Aufnahme von Ware auf, die jeweils identifizierbar mit RFID Etiketten bestückt ist. Identifizierbar bedeutet, dass bei Erkennung des RFID Etiketts bzw. des Transponders, der in welcher Form auch immer an der Ware angebracht sein kann, eindeutig bestimmbar ist, um welche Ware es sich handelt, welches Gebinde, der Preis und so weiter. Der im Folgenden oberbegrifflich als Container bezeichnete mobile Verkaufsstand ermöglicht es, mit einem RFID Lesegerät den gesamten Warenbestand zu erfassen. Entweder erfolgt dies mittels eines externen RFID Lesegerätes, so dass wenigstens eine Seitenwand des Containers so ausgebildet ist, dass der externe Scan ermöglicht ist, oder durch ein in den Container eingebautes Gerät.

Das Ergebnis des RFID-Scans wird elektronisch erfasst und gespeichert, weiterverarbeitet, weitergeleitet und/oder dergleichen. Dies kann erfolgen über ein WLAN, über GSM, Bluetooth oder sonstige Schnittstellen.

Eine Rechnereinheit nimmt die Bestandsliste entgegen und je nach gestellter Aufgabe verarbeitet sie die Daten weiter, speichert diese, erstellt Vergleichslisten zu vorhergehenden Beständen und damit die Warendifferenzlisten und so weiter. Darüber hinaus kann beispielsweise ein Listendruck erfolgen, um beispielsweise an einer Übergabestelle der abgebenden Stelle den Bestand zu dokumentieren, es kann eine Begleitliste erstellt werden und dergleichen.

Bei einem Verkauf kann erfindungsgemäß vorgesehen sein, eingenommene Beträge ebenfalls elektronisch zu erfassen und zu verwalten. Dabei handelt es sich um Kreditkartenvorgänge, Währungen, Geldmengen und so weiter. Nach Abschluss eines Verkaufes kann auf diese Weise beispielsweise durch einen erneuten Scan die Warendifferenz ermittelt werden, also die verkaufte Ware. Diese kann dann über die eingenommenen Beträge abgeglichen werden. Auf diese Weise können sehr schnell Fehlbeträge, Kassierfehler und dergleichen festgestellt werden. In jedem Fall wird der Warenbestand nach Verkaufsabschluss eindeutig festgestellt.

Es ist grundsätzlich auch möglich, den Container oder das Verkaufspersonal um eine weitere RFID Lesestation zu ergänzen, welche direkt die herausgegebene Ware erfasst und automatisch die Beträge anzeigt oder vergleicht. Bei verpackter Ware kann dies auch durch Barcodelesen erfolgen.

Mit der Erfindung wird nunmehr ein lückenloser Nachweis jedes einzelnen Produktes im Rahmen einer Logistik- und Vertriebskette möglich, so dass auf diese Weise Fehlbestände vermieden werden. Darüber hinaus ergibt sich der Vorteil der erheblichen Zeiteinsparung, der höheren Genauigkeit und der Sicherheit. Die Container können im Zusammenhang mit einem Bestandsscan verplombt werden und auf diese Weise kann eine sichere Eingangs- und Ausgangskontrolle durchgeführt werden. Diebstahl und Betrug sind damit erhebliche Grenzen gesetzt.

Beispielhaft ermöglicht die Erfindung einen Ablauf in Bezug auf Flugzeug-ZollwarenContainer, der im Folgenden kurz dargestellt wird:

### Ausrüstung:

Die Ware ist mit RFID Chips versehen. RFID Lesegerät, Kreditkartenleser und Drucker sind zusammengefasst in Form eines Hand-Computers genannt Leseeinheit am Verkaufsort vorhanden.

Der Container wird befüllt durch Lagerpersonal. Nach Befüllung wird der Container verplombt und durch ein RFID Lesegerät auf Mengen und Stückzahl der Warenpositionen abgefragt und inventarisiert. Eine Liste in Form einer Computerdatei wird dem Container zugewiesen und auf einem Speichermedium erstellt. Keine persönliche Kontrolle erforderlich.

Transport zum Verkaufsort.

Annahme des Containers sowie Speichermedium mit Bestandsliste. Zum gegebenen Zeitpunkt Liste in der Leseeinheit einlesen. Bestand per RFID am geschlossenen und verplombten Container durch Leseeinheit aufrufen. Leseeinheit vergleicht Liste mit durchgeführter Inventur. Gegebenenfalls Differenzen auf Leseeinheit oder Papierausdruck anzeigen.

Verkauf mit Leseeinheit tätigen.

Abschließen des Verkaufs, Container schließen und verplomben.

Zum gegebenen Zeitpunkt wird die RFID Inventur mit Leseeinheit durchgeführt.

Die Leseeinheit führt nun Inventur durch, vergleicht Waren auf Positionen und Mengen, kontrolliert die Einnahmen von Kreditkarten und Geldmengen in den unterschiedlich eingenommenen Währungen.
Differenzliste wird angezeigt!
a.) Direkte Weiterleitung per GSM Modul an EDV zur Weiterverarbeitung .
b.) Liste auf Speichermedium.
   Es ist keine persönliche Kontrolle erforderlich.

Rücktransport zum Lager.

Annahme des Containers.

Durch RFID Leser Inventur am geschlossenen Container vornehmen, im Falle b.) Einlesen des Speichermediums. Der Bestand wird nun mit der Leseeinheit Liste abgeglichen und der EDV wie gehabt, zwecks Weiterverarbeitung zugeführt.

Durch das System Leseeinheit ist eine lückenlose Kontrolle des Warenkreislaufes möglich. Der Warendiebstahl kann erkannt werden, in welcher Phase dieser erfolgte wie z.B. Packen, An-, Rücklieferung oder Verkauf. Geldmengendifferenz kann dem Verkauf oder dem anschließenden Transport zugeordnet werden.

Das Wissen über diese Möglichkeit wird abschreckende Wirkung erzielen.

## Patentansprüche

1. Verfahren zum Nachweis eines Warenbestandes und dessen Veränderung einer mobilen Verkaufseinheit, welche mit RFID Elementen bestückter und identifizierbarer Ware betrieben wird, wobei mittels eines RFID Lesegerätes und eines Computers der aktuelle Warenbestand der Verkaufseinheit ermittelt wird.

2. Verfahren nach Anspruch 1, **dadurch gekennzeichnet, dass** der jeweils ermittelte Bestand gespeichert und durch den Vergleich zeitlich aufeinanderfolgender Bestände Veränderungen ermittelt werden.

3. Verfahren nach einem der vorhergehenden Ansprüche, **dadurch gekennzeichnet, dass** die Bestandsdaten mittels GSM an eine Zentrale weitergeleitet werden.

4. Verfahren nach einem der vorhergehenden Ansprüche, **dadurch gekennzeichnet, dass** bei Warenausgabe die Einnahmen elektronisch erfasst und bei der Bestandsaufnahme berücksichtigt werden.

5. Verfahren nach einem der vorhergehenden Ansprüche, **dadurch gekennzeichnet, dass** die Verkaufseinheit verplombt überstellt wird.

6. Vorrichtung zur Durchführung des Verfahrens nach einem der Ansprüche 1 bis 5, **dadurch gekennzeichnet, dass** diese einen Aufnahmebereich für mit RFID Etiketten bestückter Ware sowie wenigstens eine Gehäusewandung zur Durchführung eines RFID-Warenscans aufweist.

7. Vorrichtung nach Anspruch 6, **dadurch gekennzeichnet, dass** diese eine Rechnereinheit aufweist.

8. Vorrichtung nach einem der Ansprüche 6 oder 7, **dadurch gekennzeichnet, dass** diese ein RFID Lesegerät aufweist.

9. Vorrichtung nach einem der Ansprüche 6 bis 8, **dadurch gekennzeichnet, dass** diese einen Drucker aufweist.

10. Vorrichtung nach einem der Ansprüche 6 bis 9, **dadurch gekennzeichnet, dass** diese eine Rechnereinheit in Form eines Handheldcomputers aufweist.

11. Vorrichtung nach einem der Ansprüche 6 bis 10, **dadurch gekennzeichnet, dass** diese ein Flugzeug-Verkaufs-Trolley ist.
